# EUROPEAN PATENT APPLICATION

(11) **EP 3 527 957 A1**
(43) Date of publication of application: **21.08.2019**
(21) Application number: 18157047.4
(22) Date of filing: 16.02.2018
(51) Int. Cl.: G01F 23/00, G01F 13/00, G01F 23/74

(54) **MEASUREMENT SYSTEM IN A WASHING MACHINE**

(71) Applicant: Vestel Elektronik Sanayi ve Ticaret A.S., 45030 Manisa (TR)
(72) Inventor: TURGUT, Hüseyin Ilker, 45030 Manisa (TR); BILGIC, Sergen, 45030 Manisa (TR)
(74) Representative: Ascherl, Andreas

(57) **Abstract**

The present invention refers to a system 100 for measuring the amount of remaining detergent 4 in a washing machine. The system 100 according to the present invention preferably comprises of a dispenser system for transferring the detergent 4 to the washing machine. The system 100 further includes a pouch1, a mechanism 2 and a plurality of sensors 3. The pouch 1 is configured for storing the detergent 4, wherein the pouch 1 is placed above the dispenser system. The mechanism 2 is placed externally on top of the pouch 1, wherein the mechanism 2 is capable to move along the length of the pouch 1 and to stop at the detergent 4 filled level. The plurality of sensors 3 are placed at the sides of the pouch 1. The sensors 3 are configured for determining the movement of the mechanism 2 and thereby calculating the movement distance of the mechanism 2. The amount of remaining detergent 4 is measured based on the calculated movement in distance of the mechanism 2.

## Description

This invention refers to a system for measuring the amount of remaining detergent in a washing machine according to claim 1.

### Background of the Invention

Washing machines using powder detergent as well as liquid detergent for washing are commercially available. The detergent dispensing in washing machine is done manually or automatically according to user preference. Additionally, automatic detergent dispensing system in washing machine differs depending on the detergent types. Automatic detergent dispensing systems such as liquid flowing systems with pumping mechanism are used for liquid detergent type whereas spiral structures are used for powder detergent type. Moreover, along with dispensing of the detergent to washing tub, measurement of remaining detergent in washing machine is an important factor for efficient functionality of the washing machine. Rather than measurement of remaining liquid detergents, measurement of remaining powder detergent is more difficult and therefore measuring systems in the washing machines are more available only for liquid detergents. The measurement system in washing machine has to enable a measurement of the remaining amount of the liquid detergent as well as the remaining amount of the powder detergent.

Prior art JP2016060798 (A) discloses a liquid detergent article capable of discharging a definite amount of a liquid detergent composition regardless of seasonal temperature changes such as summer season and winter season in relation to liquid detergent articles formed by filling the liquid detergent composition into a container which discharges the definite amount of a liquid by deforming a body part of the container. There is provided a liquid detergent article formed by filling a liquid detergent composition into a container, in which the liquid detergent composition comprises a surfactant (a), a thickener (b), a sequestering agent (c), and water (d) and has a viscosity at 20°C of 30 mPa s or more and 10,000 mPa s or less and has a viscosity ratio of a viscosity at 5°C to a viscosity at 40°C [the viscosity at 5°C/the viscosity at 40°C] of 0.5 or more and 5 or less. The container is a fixed-amount discharge squeeze container that discharges a predetermined amount of the liquid detergent composition of the liquid content from a discharge port of the container by deforming the container main body.

Another prior art US EA023253 (B1) relates to a domestic appliance such as a washing machine having a container (1), which is intended to receive liquids such as a detergent (2) and is set up to automatically meter said detergent (2). An electrical measuring device (3), which measures a filling level of the storage container (1), is provided. The measuring device (3) has two measuring electrodes (10, 11), which are arranged at a distance from one another in the container (1), and a circuit arrangement (4) which is coupled to the measuring electrodes (10, 11) and is designed to apply an AC voltage (UR) between the measuring electrodes (10, 11) and to measure at least one measurement variable (UM1, UM2, UD) which is correlated with the AC voltage (UR) and with a conductance of a medium (2) between the measuring electrodes (10, 11). The circuit arrangement (4) also has switching means (16, 17) which can be used to couple the measuring electrodes (10, 11) either to a first connection (12), to which a positive first potential (U1) is applied, or to a second connection (13), to which a positive second potential (U2) that is lower than the first potential (U1) or a potential (U'2) of 0 volts is applied. The invention also relates to a corresponding filling level measuring method.

However, the subject-matter of the prior art documents does not provide a system for measuring remaining amount of both of the liquid detergents and the powder detergents in the washing machine.

### Object of the Invention

It is therefore the object of the present invention to provide a system for measuring remaining amount of both of the liquid detergents and the powder detergents in the washing machine.

### Description of the Invention

The before mentioned object is solved by a system that measures the remaining amount of both liquid detergent liquid detergents and powder detergents in the washing machine according to claim 1. The present invention refers to a system for measuring the amount of remaining detergent in a washing machine. The system according to the present invention preferably comprises of a dispenser system for transferring the detergent to the washing machine. The system further includes a pouch, a mechanism and plurality of sensors. The pouch is configured for storing the detergent, wherein the pouch is placed above the dispenser system. The mechanism is placed externally on top of the pouch, wherein the mechanism is capable to move along the length of the pouch and stop at the detergent filled level. Plurality of sensors is placed at the sides of the pouch. The sensors are configured for determining the movement of the mechanism and thereby calculate the movement distance of the mechanism. The amount of remaining detergent is measured based on the calculated movement distance of the mechanism.

This solution is beneficial since such a system enables measuring the remaining amount of both detergent types in the washing machine. The mechanism is capable to move along the length of the pouch and stop at the detergent filled level. The configured sensors determine the movement of the mechanism and thereby calculate the movement distance of the mechanism. The amount of remaining detergent is measured based on said calculated movement distance of the mechanism. Additionally, implementation of such a system improves the functionality of the washing machine.

Further preferred embodiments are subject-matter of dependent claims and/or of the following specification parts.

According to a preferred embodiment of the present invention the pouch is flexible and elastic. According to a preferred embodiment of the present invention the mechanism includes a compression clip and at least two cylinders. According to a further preferred embodiment of the present invention the cylinders are ferromagnetic cylinders, wherein the ferromagnetic cylinders are placed parallel to each other. The compression clip is placed between the ferromagnetic cylinders. The ferromagnetic cylinders allow the sensors the determination of their movement in the respective distance.

Further benefits, goals and features of the present invention will be described by the following specification of the attached figures, in which components of the invention are exemplarily illustrated. Components of the devices and method according to the inventions, which match at least essentially with respect to their function, can be marked with the same reference sign, wherein such components do not have to be marked or described in all figures.

The invention is just exemplarily described with respect to the attached figures in the following.

### Brief Description of the Drawing

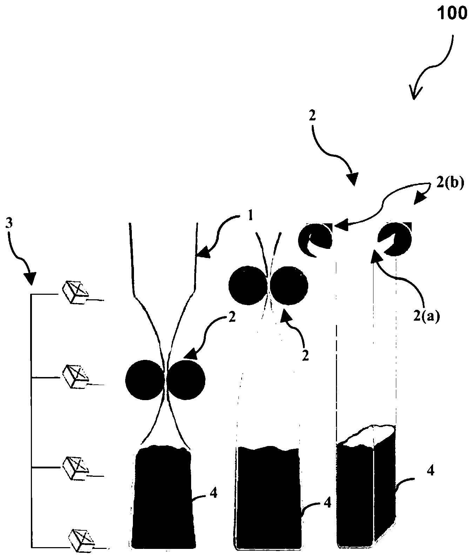

Fig. 1 illustrates an exemplary model of a system 100 that shows different positions of a mechanism, according to the present invention.

### Detailed Description of the Drawing

Fig. 1 illustrates exemplary model of a system 100 that shows different positions of a mechanism according to the present invention. This system enables the measurement of the remaining amount of both detergent types used in the washing machine. In order to achieve this, the present invention preferably comprises of a dispenser system for transferring the detergent 4 to the washing machine. The system 100 further includes a pouch 1, a mechanism 2 and plurality of sensors 3. The pouch 1 is configured for storing the detergent 4 in powder or in liquid form, wherein the pouch 1 is placed above the dispenser system. The mechanism 2 is placed externally on top of the pouch 1, wherein the mechanism 2 is capable to move along the length of the pouch 1 and to stop at the detergent 4 filled level. A plurality of sensors 3 are placed at the sides of the pouch 1. The sensors 3 are configured for determining the movement of the mechanism 2 and thereby calculating the movement in distance of the mechanism 2. The amount of remaining detergent 4 is measured based on the calculated movement in distance of the mechanism 2.

This solution is beneficial since such a system 100 enables measuring the remaining amount of both detergent types 4 in the washing machine. The mechanism 2 is capable to move along the length of the pouch 1 and stop at the detergent filled level 4. The configured sensors 3 determine the movement of the mechanism 2 and thereby calculate the movement distance of the mechanism 2. The amount of remaining detergent 4 is measured based on said calculated movement distance of the mechanism 2. Additionally, the implementation of such a system 100 improves the functionality of the washing machine.

According to a preferred embodiment of the present invention the pouch 1 is flexible and elastic. According to a further preferred embodiment of the present invention the mechanism 2 includes a compression clip 2(a) and at least two cylinders 2(b). According to a preferred embodiment of the present invention the cylinders are ferromagnetic cylinders 2(b). The ferromagnetic cylinders 2(b) are placed parallel to each other. The compression clip 2(a) is placed between the ferromagnetic cylinders 2(b). The ferromagnetic cylinders 2(b) allow the sensors 3 the determination of the movement in distance. According to the preferred embodiment of the present invention, the sensors 3 are hall-effect sensors. If the amount of detergent is at half-level, the ferromagnetic cylinders 2(b) move down along the length of the pouch 1 and stop at the detergent 4 filled level. The sensors 3 determine the movement of the ferromagnetic cylinder 2(b) and thereby calculate the movement distance of the ferromagnetic cylinder 2(b). The amount of remaining detergent 4 in the washing machine is measured using arithmetic operations based on the calculated distance regarding the movement of the ferromagnetic cylinder or cylinders 2(b).

Thus, the present invention provides a system 100 for measuring the amount of remaining detergent 4 in a washing machine. The system 100 according to the present invention preferably comprises of a dispenser system for transferring the detergent 4 to the washing machine. The system 100 further includes a pouch1, a mechanism 2 and a plurality of sensors 3. The pouch 1 is configured for storing the detergent 4, wherein the pouch 1 is placed above the dispenser system. The mechanism 2 is placed externally on top of the pouch 1, wherein the mechanism 2 is capable to move along the length of the pouch 1 and to stop at the detergent 4 filled level. The plurality of sensors 3 are placed at the sides of the pouch 1. The sensors 3 are configured for determining the movement of the mechanism 2 and thereby calculating the movement distance of the mechanism 2. The amount of remaining detergent 4 is measured based on the calculated movement distance of the mechanism 2 downwards.

### List of reference numbers

- 1: Pouch
- 2: Mechanism
- 2(a): Compression clips
- 2(b): Cylinders
- 3: Sensors
- 4: Detergents

## Claims

1. A system 100 for measuring the amount of remaining detergent 4 in a washing machine, wherein the system 100 comprising of:
a dispenser system for transferring the detergent 4 to the washing machine;
**characterized in that**
the system 100 further includes a pouch 1 configured for storing the detergent 4 in powder or liquid form, wherein the pouch 1 is placed above the dispenser system,
a mechanism 2 placed externally on top of the pouch 1, wherein the mechanism 2 is capable to move along the length of the pouch 1 and to stop at the detergent 4 filled level,
a plurality of sensors 3 placed at the sides of the pouch 1,
wherein the sensors 3 are configured for determining the movement of the mechanism 2 and thereby calculating the movement in distance of the mechanism 2; and
wherein the amount of remaining detergent 4 is measured based on the calculated movement in distance of the mechanism 2.

2. The system 100 as claimed in claim 1, wherein the pouch 1 is flexible.

3. The system 100 as claimed in claim 1, wherein the mechanism 2 includes a compression clip 2(a) and at least two cylinders 2(b).

4. The system 100 as claimed in claim 3, wherein the cylinders 2(b) are ferromagnetic cylinders.

5. The system 100 as claimed in claim 4, wherein the ferromagnetic cylinders 2(b) are placed parallel to each other.

6. The system 100 as claimed in claim 4, wherein the compression clip 2(a) is placed between the ferromagnetic cylinders 2(b).

7. The system 100 as claimed in claim 4, wherein the ferromagnetic cylinders 2(b) allow the sensors 3 for determination of the movement in distance.

8. The system 100 as claimed in claim 1, wherein the sensors 3 are hall-effect sensors.
